# EUROPÄISCHE PATENTSCHRIFT

(11) **EP 2 831 192 B1**
(45) Veröffentlichungstag und Bekanntmachung des Hinweises auf die Patenterteilung: **13.01.2016**
(21) Anmeldenummer: 13710404.8
(22) Anmeldetag: 19.03.2013
(51) Int. Cl.: C09J 183/10, C09J 183/12

(54) **VERNETZBARE MASSEN AUF BASIS VON ORGANYLOXYSILANTERMINIERTEN POLYMEREN**
CROSSLINKABLE COMPOSITIONS BASED ON ORGANYLOXYSILANE-TERMINATED POLYMERS
MATIÈRES RÉTICULABLES À BASE DE POLYMÈRES À TERMINAISON ORGANYLOXYSILANE

(30) Priorität: 30.03.2012 DE 102012205306
(43) Veröffentlichungstag der Anmeldung: 04.02.2015
(73) Patentinhaber: Wacker Chemie AG, 81737 München (DE)
(72) Erfinder: STANJEK, Volker, 84539 Ampfing (DE); SCHINDLER, Wolfram, 84577 Tüßling (DE); SCHWIEBACHER, Elke, 84359 Simbach (DE)
(74) Vertreter: Budczinski, Angelika
(86) Internationale Anmeldenummer: PCT/EP2013/055596
(87) Internationale Veröffentlichungsnummer: WO 2013/143905

(56) Entgegenhaltungen:
- EP-A1- 2 172 523
- WO-A2-2012/095826
- DE-A1-102009 027 357

## Beschreibung

Die Erfindung betrifft vernetzbare Massen von silanvernetzenden Prepolymeren, Verfahren zu deren Herstellung sowie deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Der entscheidende Vorteil von einkomponentigen Systemen ist vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei,Luftkontakt hohe Aushärtgeschwindigkeiten zu erreichen. Kommerziell verfügbare α-silanterminierte Prepolymere sind GENIOSiL^{®} STP-E10 oder -E30 der Fa. Wacker-Chemie AG.

Ein weiteres Problem bei vielen Kleb- und Dichtstoffsystemen auf Basis von silanvernetzenden Polyethern ist die Tatsache, dass diese oftmals nicht die gewünschten rheologischen Effekte aufweisen. So müssen sich die Materialien einerseits gut applizieren lassen, d.h. unter Einwirkung von Scherkräften hinreichend fließfähig sein. Andererseits sollte der Kleb- oder Dichtstoff zumindest in den meisten Anwendungen nach der Applikation möglichst standfest sein. So sollte er selbstverständlich nicht mehr von seinem gewünschten Applikationsort davon fließen können, auch dann nicht, wenn es sich dabei um eine senkrechte Fuge oder Klebenaht handelt. Außerdem sollte er auch seine Form behalten. Dies gilt insbesondere für Fugenanwendungen oder dickere und nicht z.B. durch Blenden verdeckte Klebenähte. Hier wird die Oberfläche des Kleb- oder Dichtstoffes meist direkt nach der Applikation vom Anwender noch in die gewünschte Form gebracht und dabei gleichzeitig auch geglättet. Danach sollte die Oberfläche ihre Form jedoch unbedingt beibehalten.

Um dieses gewünschte Eigenschaftsprofil zu erreichen, muss der Kleb- oder Dichtstoff nicht nur grundsätzlich thixotrope Eigenschaften aufweisen, sondern zudem muss der thixotropiebedingte Viskositätsaufbau nach Ende der Einwirkung der Scherkräfte auch relativ zügig vonstatten gehen.

Und genau hier weisen insbesondere transparente silanvernetzende Kleb- und Dichtstoffsysteme bislang signifikante Defizite auf. Zwar lassen sich auch bei transparenten silanvernetzenden Systemen mit gängigen Methoden, insbesondere durch Zugabe einer pyrogenen Kieselsäure, thixotrope Eigenschaften erreichen. Diese sind jedoch meist nicht hinreichend stark ausgeprägt bzw. gehen bei stärkerer Scherung des Materials verloren. So weisen die entsprechenden Materialen selbst dann, wenn sie vor der Einwirkung von Scherkräften über eine hinreichend gute Standfestigkeit verfügen, nach einer Scherung diese Eigenschaft nicht mehr auf. Werden die entsprechenden Materialien starken Scherkräften ausgesetzt, z.B. beim Abfüllen in oder Ausbringen aus ihrem jeweiligen Gebinde oder auch bereits während ihrer Herstellung, zeigen sie daher oftmals ein unerwünschtes Fließverhalten.

Nicht transparente, gefüllte Systeme sind auf Grund ihres meist recht hohen Füllstoffgehaltes diesbezüglich weniger kritisch, doch auch hier sind weitere Eigenschaftsverbesserungen selbstverständlich stets gewünscht.

Die Dokumente EP 2 172 523, WO 2012/095826 und WO2012/095826 offenbaren Zusammensetzungen und Massen, die ein Polymer (A) gemäß Anspruch 1, und auch möglicherweise eine hydrophile Kieselsäure und/ oder eine hydrophobe Kieselsäure enthalten.

Gegenstand der Erfindung sind Massen (M) enthaltend
(A) 100 Gewichststeile silanvernetzende Polymere der Formel

   Y~ [(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest, der mindestens eine Polyether- oder mindestens eine Polyestereinheit enthält, bedeutet,
   - R: gleich oder verschieden sein kann und einen einwertigen, gegebenenfalls substituierten Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 2 oder 3, ganz besonders bevorzugt 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist, und
(B) 5 bis 100 Gewichtsteile pyrogene Kieselsäure umfassend
   (B1) pyrogene hydrophile Kieselsäure und
   (B2) pyrogene hydrophobe Kieselsäure,
mit der Maßgabe, dass (B1) und (B2) im Massenverhältnis von 10:1 bis 1:10 eingesetzt werden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2-,2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Polymerreste Y sind Polyester-, Polyether- oder Polyurethanreste mit mindestens einer Polyether- oder mindestens einer Polyestereinheit.

Bei Polymerrest Y handelt es sich bevorzugt um solche, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Polyester oder Polyurethane auf Polyether- oder Polyesterbasis enthalten, und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen - [(CR¹₂) _{b}-SiRₐ (OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen und Verbindungen, die isocyanatreaktive Gruppen aufweisen, wobei letztere bevorzugt sind.

Besonders bevorzugt handelt es sich bei Rest Y in Formel (I) um x-wertige, über Stickstoff, Sauerstoff, Schwefel oder Kohlenstoff gebundene polyethergruppenhaltige Polyurethanreste und Polyoxyalkylenreste, insbesondere um Polyoxyalkylenreste. Sofern Y für Polyurethanreste steht, handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise mittlere Molmassen Mₙ von 10 000 bis 30 000 g/mol, bevorzugt von 11 000 bis 20 000 g/mol auf. Geeignete Verfahren zur Herstellung einer entsprechenden Komponente (A) sowie auch Beispiele für die Komponente (A) selbst sind unter anderen in EP 1 093 482 B1 (Absätze [0014] - [0023], [0039] - [0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben.

Sofern Y für Polyoxyalkylenreste steht, handelt es sich bevorzugt um lineare oder verzweigte Polyoxyalkylenreste, besonders bevorzugt um Polyoxypropylenreste, deren Kettenenden vorzugsweise über -O-C(=O)-NH- an die Gruppe bzw. Gruppen -[(CR¹₂)_{b}-SiRₐ(OR²)₃₋ₐ] gebunden sind. Die Polyoxyalkylenreste Y weisen vorzugsweise mittlere Molmassen Mₙ von 10 000 bis 30 000 g/mol, bevorzugt von 11 000 bis 20 000 g/mol auf. Geeignete Verfahren zur Herstellung einer entsprechenden Komponente (A) sowie auch Beispiele für die Komponente (A) selbst sind unter anderem in EP 1 535 940 B1 (Absätze [0005] - [0025] sowie Beispiele 1-3 und Vergleichsbeispiel 1-4) oder EP 1 896 523 B1 (Absätze [0008]-[0047]) beschrieben.

Die zahlenmittlere Molmasse Mₙ ist dabei mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmbar.

Bei den Endgruppen der erfindungsgemäß eingesetzten Verbindungen (A) handelt es sich vorzugsweise um solche der allgemeinen Formeln

-NH-C(=O)-NR'-(CR²)_{b}-SiRₐ(OR²)₃₋ₐ (II)

und

-O-C(=O)-NH-(CR¹₂)_{b}-SiRₐ(OR²)₃₋ₐ (III),

wobei die Reste und Indizes eine der oben dafür angegebenen Bedeutungen haben.

Bei den Endgruppen der erfindungsgemäß eingesetzten Verbindungen (A) handelt es sich besonders bevorzugt um solche der Formel (III).

Bevorzugt handelt es sich bei Komponente (A) um silanterminierte Polyoxyalkylene, besonders bevorzugt um silanterminierte Polyoxypropylene, mit Endgruppen der Formel (III), wobei R¹ für Wasserstoffatom, R für Methylrest, R² für Methyl- oder Ethylrest, b für 1 oder 3 und a für 0 oder 1 steht. Die silanterminierten Polyoxyalkylene weisen dabei außer den Endgruppen (III) vorzugsweise ausschließlich Polyethereinheiten auf. Vorzugsweise besitzen die erfindungsgemäßen Polymere (A) pro Molekül 2 oder 3, besonders bevorzugt 2, Endgruppen der Formel (III).

Ein großer Vorteil von silanterminierten Polyoxyalkylenen mit Endgruppen der Formel (III) gegenüber von silanterminierten Polyoxyalkylenen mit anderen Endgruppen stellt ihre einfache Herstellbarkeit durch eine Umsetzung von gängigen, mit Hydroxylgruppen terminierten Polyoxyalkylenen und Silanen der Formel

OCN-(CR¹₂)_{b}-SiRₐ (OR²)₃₋ₐ (IV)

dar, wobei alle Reste und Indizes eine der oben genannten Bedeutungen haben. Entscheidend ist dabei, dass durch diese Reaktion eine weitgehend vollständige Terminierung der vorhandenen Kettenenden gelingt, womit sich dieses Verfahren von anderen Verfahren, wie z.B. einer Hydrosilylierung von α,ω-ungesättigten Polymeren mit SiH-funktionellen Silanen, signifikant unterscheidet.

Diese weitgehend vollständige Terminierung führt überraschenderweise zu deutlich besseren Eigenschaften, insbesondere zu deutlich besseren Reißfestigkeiten der die Polymere (A) enthaltenden Massen (M) im Vergleich zu Polymeren, deren Endgruppen auf anderem Wege, z.B. über Hydrosilylierung, hergestellt worden sind.

Bei den silanterminierten Polymeren (A) handelt es sich bevorzugt um solche, deren Kettenenden mindestens zu 85%, besonders bevorzugt mindestens zu 90%, insbesondere mindestens zu 95%, mit Endgruppen der Formel (III) terminiert sind. Insbesondere werden als Komponente (A) lineare Polyoxypropylene bevorzugt, deren Ketten mindestens zu 85%, besonders bevorzugt mindestens zu 90%, insbesondere mindestens zu 95%, mit Endgruppen der Formel (III) terminiert sind.

Die mittleren Molekulargewichte Mₙ der Verbindungen (A) betragen vorzugsweise mindestens 10 000 g/mol, besonders bevorzugt mindestens 11 000 g/mol, und vorzugsweise höchstens 30 000 g/mol, besonders bevorzugt höchstens 24 000 g/mol, insbesondere höchstens 22 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Falls es sich bei Komponente (A) um verschiedene Arten von Verbindungen der Formel (I) handelt, sind Mischungen, die sowohl Verbindungen (A1) mit Endgruppen der Formel (II) oder (III), bei denen b = 1 und R¹ = H bedeutet und a = 0 oder 1 ist, enthalten, als auch Verbindungen (A2) mit Endgruppen der Formel (II) oder (III), bei denen b = 3 und R¹ = H bedeutet und a = 0 ist, bevorzugt und solche besonders bevorzugt, in denen das Gewichtsverhältnis von (A1) zu (A2) 0,1 bis 10, vorzugsweise 0,2 bis 5, beträgt.

In einer bevorzugten Ausführungsform der Erfindung wird als Komponente (A) eine Mischung eingesetzt, die mindestens eine Verbindung (A1) mit Endgruppen der Formel (III), bei denen b = 1, R¹ = H, a = 1 und R² = CH₃ ist, und mindestens eine Verbindung (A2) mit Endgruppen der Formel (III), bei denen b = 3, R¹ = H, a = 0 und R² = CH₃ ist, enthält, mit einem Gewichtsverhältnis von (A1) zu (A2) von bevorzugt 0,1 bis 10, besonders bevorzugt von 0,2 bis 5.

Die erfindungsgemäß eingesetzten Verbindungen (A) sind handelsübliche Produkte oder können nach in der Chemie gängigen Verfahren hergestellt werden. Beispiele für kommerziell erhältliche Verbindungen (A) stellen die Produkte GENIOSIL^{®} STP-E 10, STP-E 15, STP-E 30 oder STP-E 35 der Fa. Wacker Chemie AG dar.

Vorzugsweise enthalten die erfindungsgemäßen Massen (M) Verbindungen (A) in Konzentrationen von höchstens 75 Gew.-%, besonders bevorzugt höchstens 65 Gew.-%, und vorzugsweise mindestens 10 Gew.-%, besonders bevorzugt mindestens 15 Gew.-%, jeweils bezogen auf das Gesamtgewicht der Masse (M).

Bei den in Komponente (B) erfindungsgemäß eingesetzten pyrogenen Kieselsäuren kann es sich um beliebige, bisher bekannte pyrogene Kieselsäuretypen handeln.

Die in Komponente (B) erfindungsgemäß eingesetzten pyrogenen Kieselsäuren sind handelsübliche Produkte bzw. können nach in der Chemie gängigen Methoden hergestellt werden. So können die eingesetzten pyrogenen Kieselsäuren beispielsweise durch Hydrolyse bzw. Oxidation von flüchtigen Chlorsilanen in einer Knallgasflamme hergestellt werden. Gegebenenfalls wird das dabei erhaltene Produkt noch einem oder mehreren Nachbehandlungsschritten unterzogen, wie beispielsweise einer mechanischer Verdichtung oder Vermahlung, welche z.B. mittels Stift- oder Sichtermühlen erfolgen kann.

Die erfindungsgemäß eingesetzten hydrophilen pyrogenen Kieselsäuren (B1) haben eine Methanolzahl von bevorzugt unter 30, besonders bevorzugt unter 15, insbesondere von 0.

Die erfindungsgemäß eingesetzten hydrophoben Kieselsäuren (B2) haben eine Methanolzahl von bevorzugt mindestens 30, besonders bevorzugt über 40, insbesondere über 50.

Unter dem Begriff Methanolzahl ist dabei derjenige Prozentsatz (Gew.-%) Methanol in dem Wasser-Methanol-Gemisch zu verstehen, bei dem die Hälfte der Kieselsäure bei 25°C und 1013 hPa benetzt und in die Flüssigkeit eingesunken ist.

So wird hydrophobe Kieselsäure von Wasser kaum bzw. nicht benetzt, dies führt zum Aufschwimmen der hydrophoben Kieselsäure auch nach dem Schütteln auf dem unterstehenden Wasser. Die Zugabe von Methanol zu dem Wasser erniedrigt die Oberflächenspannung des Gemisches gegenüber reinem Wasser. Ist die Oberflächenspannung (mN/m) des Wasser-Methanol-Gemisches von gleicher Größe wie die Oberflächenenergie (mJ/m²) der Kieselsäure, wird die Kieselsäure benetzt und sinkt in das Wasser-Methanol-Gemisch ein. Je unpolarer die Kieselsäure ist, desto höher muss der Methanolgehalt, d.h. die Methanolzahl, sein, damit dies geschieht.

Die Methanolzahlbestimmung kann wie folgt durchgeführt werden: Das jeweils zu testende Wasser-Methanol-Gemisch wird bei 25°C und 1013 hPa mit dem gleichen Volumen an Kieselsäure überschichtet. Anschließend erfolgt ein intensives Mischen durch heftiges Schütteln für die Dauer von 5 Minuten. Nach einer darauffolgenden Ruhephase von 10 Minuten wird die eingesunkene Menge Kieselsäure bestimmt. Ist das Ergebnis hinreichend eindeutig, reicht eine optische Bestimmung mit bloßem Auge; im Zweifelsfall müssen die eingesunkenen und aufschwimmenden Kieselsäurefraktionen voneinander separiert, getrocknet und ausgewogen werden. Ist mehr als die gewichtsmäßige Hälfte der Kieselsäure eingesunken, ist die Methanolzahl kleiner gleich dem getesteten Wert. Der Versuch wird so oft mit unterschiedlichen Wasser-Methanol-Gewichtsverhältnissen wiederholt, bis die Methanolzahl, die immer zwischen dem größten getesteten Methanolgehalt, bei dem noch keine Benetzung erfolgt und dem kleinsten getesteten Methanolgehalt, bei dem eine Benetzung erfolgt, liegt, mit der entsprechend gewünschten Genauigkeit festgestellt wurde.

Bei der erfindungsgemäß eingesetzten hydrophilen Kieselsäure (B1) handelt es sich vorzugsweise um eine Kieselsäure, deren Hydrophilie nach ihrer Herstellung in der Knallgasflamme nicht durch eine Nachbehandlung mit einem hydrophobierenden Agens verringert wurde. Vorzugsweise wurde sie nach ihrer Herstellung in der Knallgasflamme überhaupt keiner chemischen Nachbehandlung unterzogen.

Die erfindungsgemäß eingesetzte hydrophile Kieselsäure (B1) weist einen Kohlenstoffgehalt von vorzugsweise maximal 0,3 Gew**.-**%, besonders bevorzugt maximal 0,1 Gew.-%, auf. Insbesondere wird eine hydrophile Kieselsäure (B1) bevorzugt, in der überhaupt kein Kohlenstoff nachweisbar ist.

Bei der erfindungsgemäß eingesetzten hydrophoben Kieselsäure (B2) handelt es sich vorzugsweise um eine Kieselsäure, deren Hydrophilie nach ihrer Herstellung in der Knallgasflamme durch eine Nachbehandlung mit einem hydrophobierenden Agens verringert wurde.

Da das hydrophobierende Agens zur Herstellung der hydrophoben Kieselsäure (B2) Kohlenstoff enthält, weist die hydrophobe Kieselsäure (B2) einen Kohlenstoffgehalt von bevorzugt über 0,3 Gew.-%, besonders bevorzugt einen Kohlenstoffgehalt von 0,5 bis 15 Gew.-%, insbesondere von 0,5 bis 10 Gew.-%, auf.

Geeignete hydrophobierende Agenzien zur Herstellung der hydrophoben Kieselsäure (B2) werden dabei in WO 2006/072407 (Seite 8, Zeile 22 bis Seite 12, Zeile 20) beschrieben. Geeignete Verfahren zur Herstellung der hydrophoben Kieselsäure (B2) werden in WO 2006/072407 (Seite 12, Zeile 22 bis Seite 15, Zeile 20) beschrieben.

Die erfindungsgemäß eingesetzte hydrophile, pyrogene Kieselsäure (B1) besteht bevorzugt aus hochreinem amorphen Siliciumdioxid.

Als Komponente (B) wird mindestens eine hydrophile pyrogene Kieselsäure (B1) und mindestens eine hydrophobe pyrogene Kieselsäure (B2) eingesetzt, wobei (B1) und (B2) in einem Massenverhältnis von bevorzugt 5:1 bis 1:5, besonders bevorzugt von 3:1 bis 1:3, insbesondere von 2:1 bis 1:2, in der erfindungsgemäßen Masse (M) vorliegen.

Als Komponente (B) werden zusätzlich zu (B1) und (B2) bevorzugt keine weiteren Bestandteile eingesetzt.

Die spezifischen Oberflächen nach BET (gemessen gemäß DIN 66131 und 66132) der erfindungsgemäß eingesetzten hydrophilen Kieselsäuren (B1) liegen vorzugsweise zwischen 10 und 500 m²/g, besonders bevorzugt zwischen 30 und 400 m²/g, insbesondere zwischen 50 und 400 m²/g.

Die spezifischen Oberflächen nach BET (gemessen gemäß DIN 66131 und 66132) der erfindungsgemäß eingesetzten hydrophoben Kieselsäuren (B2) liegen vorzugsweise zwischen 10 und 500 m²/g, besonders bevorzugt zwischen 30 und 400 m²/g, insbesondere zwischen 30 und 300 m²/g.

Die erfindungsgemäß eingesetzten Kieselsäuren (B) treten in Form von harten Sinteraggregaten auf, die wiederum Agglomerate bilden.

Die mittleren Teilchengrößen der Agglomerate der erfindungsgemäß eingesetzten Kieselsäuren (B) liegen vorzugsweise zwischen 1 und 40 µm, besonders bevorzugt zwischen 5 und 25 µm, jeweils gemessen mittels Laserbeugung an Dispersionen in einem geeigneten Lösungsmittel, wie z.B. bevorzugt Isopropanol.

Die mittleren Teilchengrößen der Sinteraggregate der erfindungsgemäß eingesetzten Kieselsäuren (B) liegen vorzugsweise zwischen 1 und 1000 nm, bevorzugt zwischen 100 und 500 nm und besonders bevorzugt zwischen 100 und 300 nm, jeweils gemessen mittels Photonen-Korrelationsspektroskopie.

Beispiele für erfindungsgemäß eingesetzte Komponente (B1) sind hydrophile pyrogene Kieselsäuren, erhältlich unter den Handelsbezeichnungen HDK^{®} DO5, HDK^{®} C10, HDK^{®} S13, HDK^{®} V15, HDK^{®} V15P, HDK^{®} N20, HDK^{®} N20P, HDK^{®} T30 oder HDK^{®} T40 bei der Wacker Chemie AG, D-München.

Beispiele für erfindungsgemäß eingesetzte Komponente (B2) sind hydrophobe pyrogene Kieselsäuren, erhältlich unter den Handelsbezeichnungen HDK^{®} H15, HDK^{®} H20, HDK^{®} H30, HDK^{®} H18, H20RH oder HDK^{®} H2000 bei der Wacker Chemie AG, D-München.

Die erfindungsgemäß eingesetzten Kieselsäuren (B1) und (B2) haben unabhängig voneinander einen Feuchtigkeitsgehalt von bevorzugt unter 1 Gew.-%, besonders bevorzugt von unter 0,5 Gew.-%.

In einer bevorzugten Ausführung der Erfindung enthalten die erfindungsgemäßen Massen (M) Komponente (B) in einer Menge von 10 bis 80 Gewichtsteilen, besonders bevorzugt von 15 bis 50 Gewichtsteilen, jeweils bezogen auf 100 Gewichtsteile Komponente (A).

Die erfindungsgemäßen Massen können neben den Polymeren (A) und der Komponente (B) noch weitere Bestandteile enthalten, wie z.B. nicht reaktive Weichmacher (C), basischen Stickstoff aufweisende Organosiliciumverbindung (D), weitere Füllstoffe (E), Siliconharze (F), Katalysatoren (G), Haftvermittler (H), Wasserfänger (I), Additive (J) und Zuschlagstoffe (K).

Beispiele für erfindungsgemäß gegebenenfalls eingesetzte Weichmacher (C) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Trimellitate, wie z.B. Tri-octyl-trimellitate oder Tri-(2-ethylhexyl)-trimellitate, Benzoesäureester; Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate; Phosphorsäureester; Sulfonsäureester; Polyester; Polyether, wie z.B. Polyethylenglycole, Poly-THF und Polypropylenglycole mit Molmassen von vorzugsweise 200 bis 22 000 g/mol; Polystyrole; Polybutadiene; Polyisobutylene; paraffinische Kohlenwasserstoffe und hochmolekulare, verzweigte Kohlenwasserstoffe.

Bevorzugt handelt es sich bei der gegebenenfalls eingesetzten Komponente (C) um Phthalsäureester, Adipinsäureester, Benzoesäureester, Glycolester, Ester gesättigter Alkandiole, Phosphorsäureester, Sulfonsäureester, Polyester, Polyether, Polystyrole, Polybutadiene, Polyisobutylene, paraffinische Kohlenwasserstoffe und hochmolekulare, verzweigte Kohlenwasserstoffe.

Bevorzugt werden Weichmacher (C) mit Molmassen, bzw. im Falle polymerer Weichmacher mittlerer Molmassen Mₙ, von größer 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20 000 g/mol, besonders bevorzugt von maximal 10 000 g/mol, insbesondere höchstens 8 000 g/mol.

Falls die erfindungsgemäßen Massen (M) Weichmacher (C) enthalten, handelt es sich um Mengen von bevorzugt mindestens 5 Gewichtsteilen, besonders bevorzugt von mindestens 10 Gewichtsteilen, insbesondere mindestens 20 Gewichtsteilen, jeweils bezogen auf 100 Gewichtsteile Komponente (A). Vorzugsweise enthalten die erfindungsgemäßen Massen (M) Weichmacher (C) in Mengen von maximal 200 Gewichtsteilen, besonders bevorzugt in Mengen von höchstens 150 Gewichtsteilen, insbesondere höchstens 100 Gewichtsteilen, jeweils bezogen auf 100 Gewichtsteile Komponente (A). Die erfindungsgemäßen Massen (M) enthalten bevorzugt Komponente (C).

Bevorzugt handelt es sich bei der gegebenenfalls eingesetzten Komponente (D) um Organosiliciumverbindungen enthaltend Einheiten der Formel

D_{c}Si(OR³)_{d}R⁴ₑO_{(4-c-d-e)/2} (V),

worin
- R³: gleich oder verschieden sein kann und Wasserstoffatom oder gegebenenfalls substituierte Kohlenwasserstoffreste bedeutet,
- D: gleich oder verschieden sein kann und einen einwertigen, SiC-gebundenen Rest mit basischem Stickstoff bedeutet,
- R⁴: gleich oder verschieden sein kann und einen einwertigen, gegebenenfalls substituierten SiC-gebundenen, von basischem Stickstoff freien organischen Rest bedeutet,
- c: 0, 1, 2, 3 oder 4, bevorzugt 1, ist,
- d: 0, 1, 2 oder 3, bevorzugt 1, 2 oder 3, besonders bevorzugt 2 oder 3, ist und
- e: 0, 1, 2 oder 3, bevorzugt 1 oder 0, ist,
mit der Maßgabe, dass die Summe aus c+d+e kleiner oder gleich 4 ist und pro Molekül mindestens ein Rest D anwesend ist.

Bei den erfindungsgemäß gegebenenfalls eingesetzten Organosiliciumverbindungen (D) kann es sich sowohl um Silane handeln, d.h. Verbindungen der Formel (V) mit c+d+e=4, als auch um Siloxane, d.h. Verbindungen enthaltend Einheiten der Formel (V) mit c+d+e≤3, wobei es sich bevorzugt um Silane handelt.

Beispiele für gegebenenfalls substituierte Kohlenwasserstoffreste R³ sind die für Rest R angegebenen Beispiele.

Bei den Resten R³ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R⁴ sind die für R angegebenen Beispiele.

Bei Rest R⁴ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CR₂)₃-, C₇H₁₅NH(CH₂)₃-, H₂N(CH₂)₄-, H₂N-CH₂-CH(CH₃)-CH-₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-, (C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)C-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Kohlenstoff-Kohlenstoff-Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (V) sind H₂N(CH₂)₃-Si(OCH₃)₃, H₂N(CH₂)₃-Si(OC₂H₅)₃, H₂N(CH₂)₃-Si (OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH (CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH (CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si (OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN ((CH₂)₃-Si(OCH₃)₃)₂, HN((CH₂)₃-Si(OC₂H₅)₃)₂HN(CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂) -Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₃)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH (CH₂)₃-Si(OCH₃)₃, cyclo-C₆H₁₁NH(CH₂)₃-Si (OC₂H₅)₃ und cyclo-C₆H₁₁NH (CH₂)₃-Si (OCH₃)₂CH₃ sowie jeweils deren Teilhydrolysate bevorzugt und H₂N (CH₂)₂NH (CH₂)₃-Si (OCH₃)₃, H₂N(CH₂)₂NH(CH₂)₃-Si (OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (D) können in den erfindungsgemäßen Massen (M) auch die Funktion eines Härtungskatalysators oder -cokatalysators übernehmen.

Des Weiteren können die erfindungsgemäß gegebenenfalls eingesetzten Organosiliciumverbindungen (D) als Haftvermittler und/oder als Wasserfänger wirken.

Die erfindungsgemäß gegebenenfalls eingesetzten Organosiliciumverbindungen (D) sind handelsübliche Produkte bzw. nach in der Chemie gängigen Verfahren herstellbar.

Falls die erfindungsgemäßen Massen (M) Komponente (D) enthalten, handelt es sich um Mengen von bevorzugt 0,01 bis 25 Gewichtsteilen, besonders bevorzugt 0,1 bis 10 Gewichtsteilen, insbesondere 0,5 bis 5 Gewichtsteilen, jeweils bezogen auf 100 Gewichtsteile Komponente (A). Die erfindungsgemäßen Massen (M) enthalten bevorzugt Komponente (D).

Bei den in den erfindungsgemäßen Massen (M) gegebenenfalls eingesetzten Füllstoffen (E) kann es sich um beliebige, bisher bekannte Füllstoffe handeln, die unterschiedlich sind zu Komponente (B) bzw. (B1) und (B2).

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres^{™} bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Falls die erfindungsgemäßen Massen (M) Füllstoffe (E) enthalten, handelt es sich bei diesen vorzugsweise um Calciumcarbonat, Talkum, Aluminiumtrihydroxid.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen (M) Füllstoffe (E) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A). Die erfindungsgemäßen Massen (M) enthalten bevorzugt keine Füllstoffe (E).

Die erfindungsgemäßen Massen (M) sind vorzugsweise weitgehend transparent.

Bei den in den erfindungsgemäßen Massen (M) gegebenenfalls eingesetzten Siliconharzen (F) handelt es sich vorzugsweise um Organopolysiloxanharze, die im Wesentlichen, vorzugsweise ausschließlich, aus T-Einheiten der Formeln PhSiO_{3/2}, PhSi(OR⁶)O_{2/2} und PhSi(OR⁶)₂O_{1/2} bestehen, wobei Ph für einen Phenylrest steht und R⁶ gleich oder verschieden sein kann und Wasserstoffatom oder gegebenenfalls mit Halogenatomen substituierte Alkylreste mit 1 bis 10 Kohlenstoffatomen bedeutet, besonders bevorzugt Wasserstoffatom oder Alkylreste mit 1 bis 4 Kohlenstoffatomen.

Die erfindungsgemäß gegebenenfalls eingesetzten Siliconharze (F) haben eine mittlere Molmasse (Zahlenmittel) Mₙ vorzugsweise von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 000 g/mol, insbesondere bei höchstens 50 000 g/mol. Sie können bei 23°C und 1000 hPa sowohl fest als auch flüssig sein, wobei flüssige Siliconharze (F) bevorzugt werden.

Die als Komponenten (F) einsetzbaren Siliconharze sind handelsübliche Produkte, z.B. verschiedene SILRES^{®}-Typen der Fa. Wacker Chemie AG, wie SILRES^{®} IC 368, SILRES^{®} IC 678 oder SILRES^{®} SY231, bzw. nach in der Chemie gängigen Verfahren herstellbar. Falls die erfindungsgemäßen Massen (M) Siliconharze (F) enthalten, handelt es sich um Mengen von vorzugsweise 0,1 bis 100 Gewichtsteilen, besonders bevorzugt von 0,2 bis 50 Gewichtsteilen, insbesondere von 0,5 bis 20 Gewichtsteilen, jeweils bezogen auf 100 Gewichtsteile Komponente (A). Die erfindungsgemäßen Massen (M) enthalten vorzugsweise keine Siliconharze (F).

Bei den in den erfindungsgemäßen Massen (M) gegebenenfalls eingesetzten Katalysatoren (G) kann es sich um beliebige, bisher bekannte Katalysatoren für durch Silankondensation härtende Massen handeln, die unterschiedlich sind zu Komponente (D).

Beispiele für metallhaltige Härtungskatalysatoren (G) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (G) sind basische Verbindungen, wie Triethylamin, Tributylamin, 1,4-Diazabicyclo[2.2.2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (G) können saure Verbindungen eingesetzt werden, wie Phosphorsäure and ihre Ester, Toluolsulfonsäure, Schwefelsäure, Salpetersäure oder auch organische Carbonsäuren, z.B. Essigsäure und Benzoesäure.

In einer Ausführung der Erfindung handelt es sich bei den gegebenenfalls eingesetzten Katalysatoren (G) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

Falls die erfindungsgemäßen Massen (M) Katalysatoren (G) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

Bei den in den erfindungsgemäßen Massen (M) gegebenenfalls eingesetzten Haftvermittlern (H) kann es sich um beliebige, bisher für durch Silankondensation härtenden Systemen beschriebene Haftvermittler handeln.

Bevorzugt handelt es sich bei den Haftvermittlern (H) um Alkoxysilane mit mindestens einer SiC-gebundenen, reaktiven organischen Funktion, wie z.B. Glycidoxyalkyl-, Carbamatoalkyl- und Methacryloxyalkyl-alkoxysilane, und deren Teilhydrolysate, die unterschiedlich sind zu Komponente (D).

Beispiele für Haftvermittler (H) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethyl-methyldimethoxysilane, Acryloxymethyl-triethoxysilan und Acryloxymethyl-methyldiethoxysilan sowie deren Teilkondensate.

Falls die erfindungsgemäßen Massen (M) Haftvermittler (H) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der Komponente (A).

Bei den in den erfindungsgemäßen Massen (M) gegebenenfalls eingesetzten Wasserfängern (I) kann es sich um beliebige, für durch Silankondensation härtende Systemen beschriebene Wasserfänger handeln.

Bevorzugt handelt es sich bei den Wasserfängern (I) um Alkoxysilane und deren Teilhydrolysate, die unterschiedlich sind zu Komponenten (D) und (H).

Beispiele für Wasserfänger (I) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Massen (M) Wasserfänger (I) enthalten, handelt es sich um Mengen von vorzugsweise 0,5 bis 30 Gewichtsteilen, besonders bevorzugt 1 bis 20 Gewichtsteilen, jeweils bezogen auf 100 Gewichtsteile der Komponente (A). Die erfindungsgemäßen Massen enthalten bevorzugt Komponente (I).

Bei den in den erfindungsgemäßen Massen (M) gegebenenfalls eingesetzten Additiven (J) kann es sich um beliebige, bisher bekannte für silanvernetzende Systeme typische Additive handeln.

Bei den erfindungsgemäß gegebenenfalls eingesetzten Additiven (J) handelt es sich bevorzugt um Antioxidantien, UV-Stabilisatoren, wie z.B. sog. HALS-Verbindungen, Fungizide und Pigmente.

Falls die erfindungsgemäßen Massen (M) Additive (J) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile der Komponente (A).

Bei den erfindungsgemäß gegebenenfalls eingesetzten Zuschlagsstoffen (K) handelt es sich bevorzugt um Tetraalkoxysilane, wie z.B. Tetraethoxysilan, und/oder deren Teilkondensate, Reaktivweichmacher, Rheologieadditive, Flammschutzmittel und organische Lösungsmittel.

Bevorzugte Reaktivweichmacher (K) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (K) handelt es sich bevorzugt um Polyamidwachse, hydrierte Rizinusöle oder Stearate.

Beispiele für organische Lösungsmittel (K) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmittel zugesetzt.

Falls die erfindungsgemäßen Massen (M) eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile der Komponente (A).

Sämtliche Inhaltstoffe der Massen (M) addieren sich stets auf 100 Gew.-%.

Bei den erfindungsgemäßen Massen handelt es sich bevorzugt um solche enthaltend
(A) 100 Gewichtsteile Verbindungen der Formel (I),
(B) 5 bis 100 Gewichtsteile pyrogene Kieselsäuren umfassend
   (B1) hydrophile pyrogene Kieselsäure und
   (B2) hydrophobe pyrogene Kieselsäure,
   mit der Maßgabe, dass (B1) und (B2) im Massenverhältnis von 10:1 bis 1:10 eingesetzt werden,
   gegebenenfalls
(C) nicht reaktiven Weichmacher,
(D) basischen Stickstoff aufweisende Verbindung, gegebenenfalls
(E) Füllstoffe,
   gegebenenfalls
(F) Katalysatoren,
   gegebenenfalls
(H) Haftvermittler,
   gegebenenfalls
(I) Wasserfänger,
   gegebenenfalls
(J) Additive und
   gegebenenfalls
(K) Zuschlagstoffe.

Die erfindungsgemäßen Massen (M) enthalten außer den Komponenten (A) bis (K) vorzugsweise keine weiteren Bestandteile.

Bei den erfindungsgemäßen Massen handelt es sich besonders bevorzugt um solche bestehend aus
(A) 100 Gewichtsteilen Verbindungen der Formel (I),
(B) 5 bis 100 Gewichtsteilen pyrogene Kieselsäuren umfassend
   (B1) hydrophile pyrogene Kieselsäure und
   (B2) hydrophobe pyrogene Kieselsäure,
   mit der Maßgabe, dass (B1) und (B2) im Massenverhältnis von 10:1 bis 1:10 eingesetzt werden,
   gegebenenfalls
(C) nicht reaktiven Weichmacher,
(D) basischen Stickstoff aufweisende Verbindung,
   gegebenenfalls
(F) Katalysatoren,
   gegebenenfalls
(H) Haftvermittler,
   gegebenenfalls
(I) Wasserfänger,
   gegebenenfalls
(J) Additive und
   gegebenenfalls
(K) Zuschlagstoffe.

Bei den erfindungsgemäßen Massen (M) handelt es sich insbesondere bevorzugt um solche bestehend aus
(A) 100 Gewichtsteilen silanterminierte Polyoxyalkylene mit Endgruppen der Formel (III), wobei R¹ für Wasserstoffatom, R² für Methyl- oder Ethylrest, b für 1 oder 3 und a für 0 oder 1 steht,
(B) 5 bis 100 Gewichtsteilen pyrogene Kieselsäuren umfassend
   (B1) hydrophile pyrogene Kieselsäure und
   (B2) hydrophobe pyrogene Kieselsäure,
   mit der Maßgabe, dass (B1) und (B2) im Massenverhältnis von 10:1 bis 1:10 eingesetzt werden,
   gegebenenfalls
(C) nicht reaktiven Weichmacher,
(D) basischen Stickstoff aufweisende Verbindung enthaltend Einheiten der Formel (V),
   gegebenenfalls
(F) Katalysatoren,
   gegebenenfalls
(H) Haftvermittler,
   gegebenenfalls
(I) Wasserfänger,
   gegebenenfalls
(J) Additive und
   gegebenenfalls
(K) Zuschlagstoffe.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen (M) handelt es sich bevorzugt um Kleb- oder Dichtstoff.

Die erfindungsgemäßen Massen (M) weisen Viskositäten von bevorzugt 500 bis 1 000 000 mPas, besonders bevorzugt von 1 000 bis 500 000 mPas, auf, jeweils bei 25°C.

Die Herstellung der erfindungsgemäßen Massen (M) kann nach beliebiger und an sich bekannter Art und Weise erfolgen, wie etwa nach Methoden und Mischverfahren, wie sie zur Herstellung von feuchtigkeitshärtenden Zusammensetzungen üblich sind.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge. Dabei können die Komponenten (B1) und (B2) separat oder als Mischung zugegeben werden. Bevorzugt werden die Komponenten (B1) und (B2) separat nacheinander oder gleichzeitig, bevorzugt nacheinander zugegeben.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen (M) handelt es sich bevorzugt um einkomponentige, unter Ausschluss von Wasser lagerfähige, bei Zutritt von Wasser bei Raumtemperatur vernetzbare Massen. Die erfindungsgemäßen Massen (M) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (M) reicht der übliche Wassergehalt der Luft aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5 bis 15°C oder bei 30 bis 50°C durchgeführt werden. Eine Unterschreitung des üblichen Wassergehalts der Luft ist prinzipiell möglich, aber nicht bevorzugt, da die Härtung dann länger dauern würde.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Massen (M).

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Verklebung von Substraten, bei dem die erfindungsgemäße Masse auf die Oberfläche mindestens eines Substrates aufgebracht, diese Oberfläche dann mit dem zu verklebenden zweiten Substrat in Kontakt gebracht und anschließend vernetzen gelassen wird.

Ein weiterer Gegenstand der Erfindung ist ein Verfahren zum Abdichten von Substraten oder Abdichten von Fugen und Spalten zwischen zwei Substraten bei dem die erfindungsgemäße Masse auf die Oberfläche mindestens eines Substrates aufgebracht oder aber in die Fuge zwischen zwei Substraten eingebracht und anschließend vernetzen gelassen wird.

Beispiele für Substrate, die erfindungsgemäß verklebt oder abgedichtet werden können, sind Kunststoffe inkl. PVC, Beton, mineralische Untergründe, Metalle, Glas, Keramik, Holz und lackierte Oberflächen. Dabei können sowohl gleiche als auch unterschiedliche Materialen miteinander verklebt bzw. abgedichtet werden.

Die erfindungsgemäßen Massen (M) haben den Vorteil, dass sie aus leicht und kommerziell problemlos zugänglichen sowie preisgünstigen Materialien, insbesondere aus kommerziell verfügbaren silanvernetzenden Polymeren, z.B. den verschiedenen GENIOSIL^{®} STP-E-Typen der Fa. Wacker Chemie AG, herstellbar sind.

Die erfindungsgemäßen vernetzbaren Massen (M) haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen (M) den Vorteil, dass sie ein ausgezeichnetes Haftungsprofil aufweisen.

Zudem haben die erfindungsgemäßen Massen (M) den Vorteil, dass sie leicht zu verarbeiten sind und über eine leicht glättbare Oberfläche verfügen.

Des Weiteren haben die erfindungsgemäßen vernetzbaren Massen (M) den Vorteil, dass daraus hergestellte Kleb- und Dichtstoffe eine gute Thixotropie und Standfestigkeit aufweisen. Die Standfestigkeit bleibt dabei auch nach starker Scherung, wie sie z.B. beim Ausbringen des Kleb- oder Dichtstoffes aus ihrem Lagergebinde auftreten kann, erhalten.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

### Herstellung einer transparenten Klebstoffformulierung

98,5 g eines beidseitig silanterminierten linearen Polypropylenglycols mit einer mittleren Molmasse (Mₙ) von 18000 g/mol und Endgruppen der Formel -O-C (=O) -NH- (CH₂) -Si (CH₃) (OCH₃)₂ (käuflich erhältlich unter der Bezeichnung GENIOSIL^{®} STP-E30 bei der Fa. Wacker Chemie AG) werden in einem Laborplanetenmischer der Fa. PC-Laborsystem, ausgestattet mit zwei Balkenmischern, bei 25°C mit 4,0 g Vinyltrimethoxysilan, 67,1 g Cyclohexan-1,2-dicarbonsäurediisononylester (käuflich erhältlich unter der Bezeichnung "Hexamoll DINCH" bei BASF AG, D-Ludwigshafen), 1,6 g UV-Stabilisator (käuflich erhältlich unter der Bezeichnung HOSTAVIN^{®} 3206 liq. bei der Clariant Produkte GmbH, D-Frankfurt a.M.; CAS-NR: 82493-14-9) und 0,6 g HALS-Stabilisator (käuflich erhältlich unter der Bezeichnung TINUVIN^{®} 123 bei der BASF AG, D-Ludwigshafen; CAS-NR: 129757-67-1) für 2 Minuten bei 200 U/min homogenisiert. Danach werden 12,15 g einer hydrophilen pyrogenen Kieselsäure mit einer BET-Oberfläche von ca. 200 m²/g (käuflich erhältlich unter HDK^{®} N20 bei der Wacker Chemie AG, D-München) und 12,15 g einer hydrophoben pyrogenen Kieselsäure mit einer BET-Oberfläche von ca. 200 m²/g (HDK^{®} H18, käuflich erhältlich bei der Wacker Chemie AG, D-München) eine Minute unter Rühren bei 600 U/min eingemischt. Schließlich werden 4,0 g 3-Aminopropyl-trimethoxysilan für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Vergleichsbeispiel 1 (V1)

### Herstellung einer transparenten Klebstoffformulierung

98,3 g eines beidseitig silanterminierten linearen Polypropylenglycols mit einer mittleren Molmasse (Mₙ) von 18000 g/mol und Endgruppen der Formel -O-C(=O)-NH-(CH₂)-Si(CH₃) (OCH₃)₂ (käuflich erhältlich unter der Bezeichnung GENIOSIL^{®} STP-E30 bei der Wacker Chemie AG) werden in einem Laborplanetenmischer der Fa. PC-Laborsystem, ausgestattet mit zwei Balkenmischern, bei 25°C mit 4,0 g Vinyltrimethoxysilan, 67,1 g Cyclohexan-1,2-dicarbonsäurediisononylester (käuflich erhältlich unter der Bezeichnung "Hexamoll DINCH" bei der BASF AG, D-Ludwigshafen), 1,6 g UV-Stabilisator (käuflich erhältlich unter der Bezeichnung TINUVIN^{®} 400 bei der BASF AG, D-Ludwigshafen; CAS-NR: 153519-44-9) und 0,6 g HALS-Stabilisator (käuflich erhältlich unter der Bezeichnung TINUVIN^{®} 292 bei der BASF AG, D-Ludwigshafen; CAS-NR: 41556-26-7 und 82919-37-7) für 2 Minuten bei 200 U/min homogenisiert. Danach werden 24,3 g einer hydrophoben pyrogenen Kieselsäure mit einer BET-Oberfläche von ca. 200 m²/g, einer Methanolzahl von 70-80 und einem Kohlenstoffgehalt von 4-4,5 Gew.-% (HDK^{®} H18, käuflich erhältlich bei der Wacker Chemie AG, D-München) eine Minute unter Rühren bei 600 U/min eingemischt. Schließlich werden 4,0 g 3-Aminopropyl-trimethoxysilan für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Beispiel 2

### Herstellung einer transparenten Klebstoffformulierung

101 g eines beidseitig silanterminierten linearen Polypropylenglycols mit einer mittleren Molmasse (Mₙ) von 18000 g/mol und Endgruppen der Formel -O-C(=O)-NH-(CH₂)-Si(CH₃)(OCH₃)₂ (käuflich erhältlich unter der Bezeichnung GENIOSIL^{®} STP-E30 bei der Wacker Chemie AG) werden in einem Laborplanetenmischer der Fa. PC-Laborsystem, ausgestattet mit zwei Balkenmischern, bei 25°C mit 4,0 g Vinyltrimethoxysilan, 69,8 g Cyclohexan-1,2-dicarbonsäurediisononylester (käuflich erhältlich unter der Bezeichnung "Hexamoll DINCH" bei der BASF AG, D-Ludwigshafen), 1,6 g UV-Stabilisator (käuflich erhältlich unter der Bezeichnung TINUVIN^{®} 400 bei der BASF AG, D-Ludwigshafen; CAS-NR: 153519-44-9) und 0,6 g HALS-Stabilisator (käuflich erhältlich unter der Bezeichnung TINUVIN^{®} 123 bei der BASF AG, D-Ludwigshafen; CAS-NR: 129757-67-1) für 2 Minuten bei 200 U/min homogenisiert. Danach werden 9,5 g einer hydrophilen pyrogenen Kieselsäure mit einer BET-Oberfläche von ca. 200 m²/g, einer Methanolzahl von 0 und einem Kohlenstoffgehalt von 0 Gew.-% (HDK^{®} N20, käuflich erhältlich bei der Wacker Chemie AG, D-München) und 9,5 g einer hydrophoben pyrogenen Kieselsäure mit einer BET-Oberfläche von ca. 200 m²/g, einer Methanolzahl von 70-80 und einem Kohlenstoffgehalt von 4-4,5 Gew.-% (HDK^{®} H18, käuflich erhältlich bei der Wacker Chemie AG, D-München) eine Minute unter Rühren bei 600 U/min eingemischt. Schließlich werden 4,0 g 3-Aminopropyl-trimethoxysilan für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Beispiel 3

### Herstellung einer transparenten Klebstoffformulierung

50,5 g eines beidseitig silanterminierten linearen Polypropylenglycols mit einer mittleren Molmasse (Mₙ) von 18000 g/mol und Endgruppen der Formel -O-C(=O)-NH-(CH₂)-Si(CH₃) (OCH₃)₂ (käuflich erhältlich unter der Bezeichnung GENIOSIL^{®} STP-E30 bei der Wacker Chemie AG) und 50,5 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG) werden in einem Laborplanetenmischer der Fa. PC-Laborsystem, ausgestattet mit zwei Balkenmischern, bei 25°C mit 4,0 g Vinyltrimethoxysilan, 69,8 g Cyclohexan-1,2-dicarbonsäurediisononylester (käuflich erhältlich unter der Bezeichnung "Haxamoll DINCH" bei der BASF AG, D-Ludwigshafen), 1,6 g UV-Stabilisator (käuflich erhältlich unter der Bezeichnung TINUVIN^{®} 400 bei der BASF AG, D-Ludwigshafen; CAS-NR: 153519-44-9) und 0,6 g HALS-Stabilisator (käuflich erhältlich unter der Bezeichnung TINUVIN^{®} 123 bei der BASF AG, D-Ludwigshafen; CAS-NR: 129757-67-1) für 2 Minuten bei 200 U/min homogenisiert. Danach werden 9,5 g einer hydrophilen pyrogenen Kieselsäure mit einer BET-Oberfläche von ca. 200 m²/g, einer Methanolzahl von 0 und einem Kohlenstoffgehalt von 0 Gew.-% (HDK^{®} N20, käuflich erhältlich bei der Wacker Chemie AG, D-München) und 9,5 g einer hydrophoben pyrogenen Kieselsäure mit einer BET-Oberfläche von ca. 200 m²/g, einer Methanolzahl von 70-80 und einem Kohlenstoffgehalt von 4-4,5 Gew.-% (HDK^{®} H18, käuflich erhältlich bei der Wacker Chemie AG, D-München) eine Minute unter Rühren bei 600 U/min eingemischt. Schließlich werden 4,0 g 3-Aminopropyl-trimethoxysilan für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Beispiel 4

### Herstellung einer Klebstoffformulierung

50,5 g eines beidseitig silanterminierten linearen Polypropylenglycols mit einer mittleren Molmasse (Mₙ) von 12000 g/mol und Endgruppen der Formel -O-C(=O)-NH-(CH₂)-Si(CH₃) (OCH₃)₂ (käuflich erhältlich unter der Bezeichnung GENIOSIL^{®} STP-E10 bei der Wacker Chemie AG) und 50,5 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei Wacker Chemie AG) werden in einem Laborplanetenmischer der Fa. PC-Laborsystem, ausgestattet mit zwei Balkenmischern, bei 25°C mit 4,0 g Vinyltrimethoxysilan, 69,8 g Cyclohexan-1,2-dicarbonsäurediisononylester (käuflich erhältlich unter der Bezeichnung "Hexamoll DINCH" bei der BASF AG, D-Ludwigshafen), 1,6 g UV-Stabilisator (käuflich erhältlich unter der Bezeichnung TINUVIN^{®} 400 bei der BASF AG, D-Ludwigshafen; CAS-NR: 153519-44-9) und 0,6 g HALS-Stabilisator (käuflich erhältlich unter der Bezeichnung TINUVIN^{®} 123 bei der BASF AG, D-Ludwigshafen; CAS-NR: 129757-67-1) für 2 Minuten bei 200 U/min homogenisiert. Danach werden 9,5 g einer hydrophilen pyrogenen Kieselsäure mit einer BET-Oberfläche von ca. 200 m²/g, einer Methanolzahl von 0 und einem Kohlenstoffgehalt von 0 Gew.-% (HDK^{®} N20, käuflich erhältlich bei der Fa. Wacker Chemie AG, D-München) und 9,5 g einer hydrophoben pyrogenen Kieselsäure mit einer BET-Oberfläche von ca. 200 m²/g, einer Methanolzahl von 70-80 und einem Kohlenstoffgehalt von 4-4,5 Gew.-% (HDK^{®} H18, käuflich erhältlich bei der Fa. Wacker Chemie AG, D-München) eine Minute unter Rühren bei 600 U/min eingemischt. Schließlich werden 4,0 g 3-Aminopropyl-trimethoxysilan für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Beispiel 5

Die in den Beispielen 1, V1, 2, 3 und 4 erhaltenen Massen werden hinsichtlich ihrer rheologischen Eigenschaften vor dem Aushärten, ihrer Hautbildungszeit sowie der mechanischen Eigenschaften nach dem Aushärten untersucht.

### Rheologische Eigenschaften

Zur Bestimmung der rheologischen Eigenschaften wird gemäß DIN 54458 die sogenannte Fließgrenze τ_{f} bestimmt. Dieser Wert stellt die Schubspannung am Schnittpunkt der Kurven von Speichermodul G' und Verlustmodul G" dar, wobei das Speichermodul G' die während der Deformation reversibel (d.h. durch elastische Verformung) aufgenommene Energie beschreibt und das Verlustmodul G" die während der Deformation irreversibel (d.h. durch plastische Verformung) verbrauchte Energie beschreibt.

Damit steht die sogenannte Fließgrenze τ_{f} näherungsweise für diejenige Schubspannung, durch die eine Substanz zum Fließen gebracht wird. Je höher die Fließgrenze τ_{f} ist, desto standfester ist die entsprechende Masse.

Die Bestimmung der Fließgrenze τ_{f} erfolgt dabei einmal mit unbehandelten Proben der in den Beispielen 1, V1, 2, 3 und 4 erhaltenen Massen. In einer zweiten Messreihe werden die entsprechenden Proben zunächst in einem Speedmixer der Fa. Hauschild (D-59065 Hamm), bei ca. 25°C für 60 s bei 2500 Umdrehungen/min geschert. Anschließend erfolgt die Bestimmung der Fließgrenze τ_{f} innerhalb von 60 min.

Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Raupe auf Karton aufgetragen und bei Normklima (23°C und 50% relative Luftfeuchtigkeit) gelagert. Während des Aushärtens wird in regelmäßigen Zeitabständen die Bildung einer Haut getestet. Dazu wird ein gespitzter Bleistift (Härte HB) vorsichtig auf die Oberfläche der Probe aufgesetzt und nach oben gezogen. Bleibt Probe am Bleistift kleben, hat sich noch keine Haut gebildet. Bleibt keine Probe am Bleistift mehr kleben, so hat sich eine Haut gebildet und die Zeit wird notiert.

Die Ergebnisse finden sich in Tabelle 1.

### Mechanische Eigenschaften

Die Massen werden jeweils auf ausgefrästen Teflonplatten mit 2 mm Tiefe ausgestrichen und 2 Wochen bei 23°C und 50% rel. Luftfeuchte gehärtet. Anschließend werden
Reißfestigkeit gemäß DIN 53504-S1,
Reißdehnung gemäß DIN 53504-S1 und
Shorehärte A gemäß DIN 53505 bestimmt.

Die Ergebnisse finden sich in Tabelle 1.

**Tabelle 1:**

| Klebstoffformulierung | 1 | V1 | 2 | 3 | 4 |
|---|---|---|---|---|---|
| Gehalt hydrophile Kieselsäure [Gew.-%] | 6,1 | 0 | 4,75 | 4,75 | 4,75 |
| Gehalt hydrophobe Kieselsäure [Gew.-%] | 6,1 | 12,2 | 4,75 | 4,75 | 4,75 |
| Rheologische Eigenschaften | | | | | |
| Fließgrenze ohne vorherige Scherung [Pa] | 11 300 | 5 600 | 6 500 | 6 400 | 5 200 |
| Fließgrenze nach vorheriger Scherung [Pa] | 8 500 | <100 | 5 800 | 6 100 | 5 000 |
| Härtungseigenschaften | | | | | |
| Hautbildungszeit [min] | 20 | 40 | 31 | 25 | 29 |
| Mechanische Eigenschaften | | | | | |
| Reißfestigkeit [MPa] | 2,5 | 2,6 | 2,1 | 1,8 | 1,6 |
| Reißdehnung [%] | 347 | 461 | 424 | 281 | 208 |
| Shorehärte A | 35 | 33 | 22 | 27 | 31 |

## Patentansprüche

1. Massen (M) enthaltend
(A) 100 Gewichtsteile silanvernetzende Polymere der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest, der mindestens eine Polyether- oder mindestens eine Polyestereinheit enthält, bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist, und
(B) 5 bis 100 Gewichtsteile pyrogene Kieselsäure umfassend
(B1) pyrogene hydrophile Kieselsäure und
(B2) pyrogene hydrophobe Kieselsäure,
mit der Maßgabe, dass (B1) und (B2) im Massenverhältnis von 10:1 bis 1:10 eingesetzt werden.

2. Massen gemäß Anspruch 1, **dadurch gekennzeichnet, dass** es sich bei Rest Y in Formel (I) um x-wertige, über Stickstoff, Sauerstoff, Schwefel oder Kohlenstoff gebundene polyethergruppenhaltige Polyurethanreste und Polyoxyalkylenreste handelt.

3. Massen gemäß einem oder mehreren der Ansprüche 1 bis 2, **dadurch gekennzeichnet, dass** die Komponenten (B1) und (B2) in einem Massenverhältnis zwischen 5:1 und 1:5 vorliegen.

4. Massen gemäß einem oder mehreren der Ansprüche 1 bis 3, **dadurch gekennzeichnet, dass** sie Komponente (B) in einer Menge von 15 bis 50 Gewichtsteilen, jeweils bezogen auf 100 Gewichtsteile Komponente (A), enthalten.

5. Massen gemäß einem oder mehreren der Ansprüche 1 bis 4, **dadurch gekennzeichnet, dass** es sich um solche enthaltend
(A) 100 Gewichtsteile Verbindungen der Formel (I),
(B) 5 bis 100 Gewichtsteile pyrogene Kieselsäuren umfassend
(B1) hydrophile pyrogene Kieselsäure und
(B2) hydrophobe pyrogene Kieselsäure,
mit der Maßgabe, dass (B1) und (B2) im Massenverhältnis von 10:1 bis 1:10 eingesetzt werden,
gegebenenfalls
(C) nicht reaktiven Weichmacher,
(D) basischen Stickstoff aufweisende Verbindung,
gegebenenfalls
(E) Füllstoffe,
gegebenenfalls
(F) Katalysatoren,
gegebenenfalls
(H) Haftvermittler,
gegebenenfalls
(I) Wasserfänger,
gegebenenfalls
(J) Additive und
gegebenenfalls
(K) Zuschlagstoffe
handelt.

6. Massen gemäß einem oder mehreren der Ansprüche 1 bis 5, **dadurch gekennzeichnet, dass** es sich um solche bestehend aus
(A) 100 Gewichtsteilen silanterminierte Polyoxyalkylene mit Endgruppen der Formel
-O-C(=O) -NH- (CR¹₂)_{b}-SiRₐ(OR²)₃₋ₐ (III),
wobei R¹ für Wasserstoffatom, R² für Methyl- oder Ethylrest, b für 1 oder 3 und a für 0 oder 1 steht,
(B) 5 bis 100 Gewichtsteilen pyrogene Kieselsäuren umfassend
(B1) hydrophile pyrogene Kieselsäure und
(B2) hydrophobe pyrogene Kieselsäure,
mit der Maßgabe, dass (B1) und (B2) im Massenverhältnis von 10:1 bis 1:10 eingesetzt werden,
gegebenenfalls
(C) nicht reaktiven Weichmacher,
(D) basischen Stickstoff aufweisende Verbindung enthaltend Einheiten der Formel (V),
gegebenenfalls
(F) Katalysatoren,
gegebenenfalls
(H) Haftvermittler,
gegebenenfalls
(I) Wasserfänger,
gegebenenfalls
(J) Additive und
gegebenenfalls
(K) Zuschlagstoffe
handelt.

7. Verfahren zur Herstellung der Massen gemäß einem oder mehreren der Ansprüche 1 bis 6 durch Mischen der einzelnen Komponenten in beliebiger Reihenfolge.

8. Formkörper hergestellt durch Vernetzung der Massen gemäß einem oder mehreren der Ansprüche 1 bis 6 oder hergestellt nach Anspruch 7.

9. Verfahren zur Verklebung von Substraten, bei dem die Masse gemäß einem oder mehreren der Ansprüche 1 bis 6 oder hergestellt nach Anspruch 7 auf die Oberfläche mindestens eines Substrates aufgebracht, diese Oberfläche dann mit dem zu verklebenden zweiten Substrat in Kontakt gebracht und anschließend vernetzen gelassen wird.

10. Verfahren zum Abdichten von Substraten oder Abdichten von Fugen und Spalten zwischen zwei Substraten, bei dem die Masse gemäß einem oder mehreren der Ansprüche 1 bis 6 oder hergestellt nach Anspruch 7 auf die Oberfläche mindestens eines Substrates aufgebracht oder aber in die Fuge zwischen zwei Substraten eingebracht und anschließend vernetzen gelassen wird.

## Claims

1. Compositions (M) comprising
(A) 100 parts by weight of silane-crosslinking polymers of the formula
Y-(CR¹₂)_{b}-SiRₐ(OR²)₃₋ₐ]ₓ (I)
where
Y is an x-valent, nitrogen-, oxygen-, sulfur- or carbon-bonded polymer radical containing at least one polyether unit or at least one polyester unit,
R may be the same or different and is a monovalent, optionally substituted hydrocarbyl radical,
R¹ may be the same or different and is a hydrogen atom or a monovalent, optionally substituted hydrocarbyl radical which may be attached to the carbon atom via nitrogen, phosphorus, oxygen, sulfur or a carbonyl group,
R² may be the same or different and is a hydrogen atom or a monovalent, optionally substituted hydrocarbyl radical,
x is an integer from 1 to 10,
a may be the same or different and is 0, 1 or 2 and
b may be the same or different and is an integer from 1 to 10, and
(B) 5 to 100 parts by weight of fumed silica comprising
(B1) fumed hydrophilic silica and
(B2) fumed hydrophobic silica,
with the proviso that (B1) and (B2) are used in a mass ratio of 10:1 to 1:10.

2. Compositions according to Claim 1, **characterized in that** the Y radical in formula (I) comprises x-valent, nitrogen-, oxygen-, sulfur- or carbon-bonded, polyether group-containing polyurethane radicals and polyoxyalkylene radicals.

3. Compositions according to one or more of Claims 1 and 2, **characterized in that** components (B1) and (B2) are present in a mass ratio between 5:1 and 1:5.

4. Compositions according to one or more of Claims 1 to 3, **characterized in that** they contain component (B) in an amount of 15 to 50 parts by weight, based in each case on 100 parts by weight of component (A).

5. Compositions according to one or more of Claims 1 to 4, **characterized in that** they comprise
(A) 100 parts by weight of compounds of the formula (I),
(B) 5 to 100 parts by weight of fumed silicas comprising
(B1) hydrophilic fumed silica and
(B2) hydrophobic fumed silica,
with the proviso that (B1) and (B2) are used in a mass ratio of 10:1 to 1:10,
optionally
(C) unreactive plasticizers,
(D) basic nitrogen-containing compound,
optionally
(E) fillers,
optionally
(F) catalysts,
optionally
(H) adhesion promoters,
optionally
(I) water scavengers,
optionally
(J) additives and
optionally
(K) admixtures.

6. Compositions according to one or more of Claims 1 to 5, **characterized in that** they consist of
(A) 100 parts by weight of silane-terminated polyoxyalkylenes having end groups of the formula
-O-C(=O)-NH- (CR¹₂)_{b}-SiRₐ(OR²)₃₋ₐ (III)
where R¹ is a hydrogen atom, R² is a methyl or ethyl radical, b is 1 or 3 and a is 0 or 1,
(B) 5 to 100 parts by weight of fumed silicas comprising
(B1) hydrophilic fumed silica and
(B2) hydrophobic fumed silica,
with the proviso that (B1) and (B2) are used in a mass ratio of 10:1 to 1:10,
optionally
(C) unreactive plasticizers,
(D) basic nitrogen-containing compound containing units of the formula (V),
optionally
(F) catalysts,
optionally
(H) adhesion promoters,
optionally
(I) water scavengers,
optionally
(J) additives and
optionally
(K) admixtures.

7. Method of producing the compositions according to one or more of Claims 1 to 6 by mixing the individual components in any sequence.

8. Shaped body produced by crosslinking the compositions according to one or more of Claims 1 to 6 or produced as per Claim 7.

9. Method of bonding substrates in which the composition according to one or more of Claims 1 to 6 or produced as per Claim 7 is applied to the surface of at least one substrate, then this surface is contacted with the second substrate to be bonded, and then left to crosslink.

10. Method of sealing substrates or sealing joints and gaps between two substrates, in which the composition according to one or more of Claims 1 to 6 or produced as per Claim 7 is applied to the surface of at least one substrate or else introduced into the joint between two substrates, and then left to crosslink.

## Revendications

1. Masses (M) contenant
(A) 100 parties en poids de polymères réticulant par silane de formule
Y-(CR¹₂)_{b}-SiRₐ(OR²)₃₋ₐ]ₓ (I),
dans laquelle
Y signifie un radical polymère x-valent, lié par azote, oxygène, soufre ou carbone, qui contient au moins une unité polyéther ou au moins une unité polyester,
R peut être identique ou différent et représente un radical hydrocarboné monovalent, le cas échéant substitué,
R¹ peut être identique ou différent et représente un atome d'hydrogène ou un radical hydrocarboné monovalent, le cas échéant substitué, qui peut être lié à l'atome de carbone par azote, phosphore, oxygène, soufre ou un groupe carbonyle,
R² peut être identique ou différent et représente un atome d'hydrogène ou un radical hydrocarboné monovalent, le cas échéant substitué,
x vaut un nombre entier de 1 à 10.
a peut être identique ou différent et vaut 0, 1 ou 2 et
b peut être identique ou différent et vaut un nombre entier de 1 à 10 et
(B) 5 à 100 parties en poids de silice pyrogène, comprenant
(B1) de la silice pyrogène hydrophile et
(B2) de la silice pyrogène hydrophobe,
à condition que (B1) et (B2) soient utilisés dans un rapport massique de 10:1 à 1:10.

2. Masses selon la revendication 1, **caractérisées en ce qu'**il s'agit, pour le radical Y dans la formule (I), de radicaux polyuréthane contenant des groupes polyéther et de radicaux polyoxyalkylène x-valents, liés via azote, oxygène, soufre ou carbone.

3. Masses selon l'une ou plusieurs des revendications 1 à 2, **caractérisées en ce que** les composants (B1) et (B2) se trouvent dans un rapport massique entre 5:1 et 1:5.

4. Masses selon l'une ou plusieurs des revendications 1 à 3, **caractérisées en ce qu'**elles contiennent le composant (B) en une quantité de 15 à 50 parties en poids, à chaque fois par rapport à 100 parties en poids de composant (A).

5. Masses selon l'une ou plusieurs des revendications 1 à 4, **caractérisées en ce qu'**il s'agit de masses contenant
(A) 100 parties en poids de composés de formule (I),
(B) 5 à 100 parties en poids de silices pyrogènes, comprenant
(B1) de la silice pyrogène hydrophile et
(B2) de la silice pyrogène hydrophobe,
à condition que (B1) et (B2) soient utilisés dans un rapport massique de 10:1 à 1:10, le cas échéant
(C) du plastifiant non réactif,
(D) un composé présentant de l'azote basique, le cas échéant
(E) des charges, le cas échéant
(F) des catalyseurs, le cas échéant
(H) des promoteurs d'adhérence, le cas échéant
(I) des pièges d'eau, le cas échéant
(J) des additifs et le cas échéant
(K) des adjuvants.

6. Masses selon l'une ou plusieurs des revendications 1 à 5, **caractérisées en ce qu'**il s'agit de masses constituées par
(A) 100 parties en poids de polyoxyalkylènes terminés par silane, présentant des groupes terminaux de formule
-O-C(=O)-NH-(CR¹2)_{b}-SiRₐ(OR²)₃₋ₐ (III),
dans laquelle R¹ représente un atome d'hydrogène, R² représente un radical méthyle ou éthyle, b vaut 1 ou 3 et a vaut 0 ou 1,
(B) 5 à 100 parties en poids de silices pyrogènes, comprenant
(B1) de la silice pyrogène hydrophile et
(B2) de la silice pyrogène hydrophobe,
à condition que (B1) et (B2) soient utilisés dans un rapport massique de 10:1 à 1:10, le cas échéant (C) du plastifiant non réactif,
(D) un composé présentant de l'azote basique, contenant des unités de formule (V), le cas échéant
(F) des catalyseurs, le cas échéant
(H) des promoteurs d'adhérence, le cas échéant
(I) des pièges d'eau, le cas échéant
(J) des additifs et le cas échéant
(K) des adjuvants.

7. Procédé pour la préparation des masses selon l'une ou plusieurs des revendications 1 à 6 par mélange des différents composants dans un ordre quelconque.

8. Corps façonnés, préparés par réticulation des masses selon l'une ou plusieurs des revendications 1 à 6 ou préparées selon la revendication 7.

9. Procédé pour le collage de substrats, dans lequel on applique la masse selon l'une ou plusieurs des revendications 1 à 6 ou préparée selon la revendication 7 sur la surface d'au moins un substrat, on met ensuite cette surface en contact avec le deuxième substrat à coller puis on la laisse réticuler.

10. Procédé pour étanchéifier des substrats, ou étanchéifier des joints et des fentes entre deux substrats, dans lequel on applique la masse selon l'une ou plusieurs des revendications 1 à 6 ou préparée selon la revendication 7 sur la surface d'au moins un substrat ou on l'introduit dans le joint entre deux substrats et on la laisse ensuite réticuler.
